# EUROPEAN PATENT SPECIFICATION

(11) **EP 1 026 803 B1**
(45) Date of publication and mention of the grant of the patent: **26.11.2008**
(21) Application number: 00500004.7
(22) Date of filing: 14.01.2000
(51) Int. Cl.: H02G 3/06

(54) **Support plate member for electrical cable carrier tray sections**
Tragplatte für Stromkabel-Trägerabschnitte
Plaque de support pour sections de goutières de cables électriques

(30) Priority: 04.02.1999 ES 9900286 U
(43) Date of publication of application: 09.08.2000
(73) Proprietor: Unex Aparellaje Electrico S.L., 08903 L'Hospitalet de Llobregat (Barcelona) (ES)
(72) Inventor: Benito Navazo, Juan Manuel, 08190 Sant Cugat Del Valles (Barcelona) (ES)
(74) Representative: Curell Aguilà, Marcelino

(56) References cited:
- DE-U- 7 338 265
- DE-U- 8 119 513

## Description

### BACKGROUND OF THE INVENTION

### Field of the Invention

This invention relates to a support plate member for sections of electrical cable carrier trays, in which the tray sections are generally elongated, define a width in the transverse direction and define ends in the lengthways direction and in which each pair of sections are joined at a point of connection, particularly a plate member for reinforcing the point of connection of two independent sections of said cable carrier trays which are associated together by parts attached to the side and bottom walls thereof.

These support plate member for electrical cable carrier trays are usually formed by a flattened, essentially rigid, body member having a larger dimension equal to or less than the width of the trays to be supported and one of the surfaces, to be the visible surface, is smooth while the other surface, as a concealed surface, is provided with reinforcing and stiffening ribs.

The said support plate members are provided with holes which pass through the constituent flattened body member thereof and define points for anchoring one of these plate members to the ends of each of the two cable carrier tray sections to be joined.

### Prior Art Reference

Document DE 73 38 265 U describes a joining member for joining adjacent sections of electrical cable carrier trays, comprising a flattened base provided with a reinforcing rib and a second smooth surface. The joining member is provided with means for attachment to be attached to the ends of two adjacents tray sections.

The fact of having means for anchoring respective ends of two trays to be joined to one same support plate member suffers from the drawback that the two sections in question are attached together too rigidly, which does not allow them to expand freely. Thus, in the absence of any degree of freedom, undesirable deformation and loss of level occur, contrary to what it was wanted to achieve with the use of such support plate members.

With a view to overcoming the above drawback, without sacrificing the support function assigned to such plate members, the solution has been adopted of providing degrees of freedom to the joint between both tray sections, on at least one of the sections to be joined.

### SUMMARY OF THE INVENTION

In accordance with the above solution, there has been developed the support plate member for electrical cable tray sections of the invention, which support plate member is characterized essentially in that it is differentiated lengthways in two ideal halves, of which one half is provided with means for attachment to the end of one of the two tray sections to be joined, while the other half lacks such attachment means and forms a stirrup for the free seating of the end of the other section of the two trays in question, which section has degrees of freedom relative to the support plate member itself and to the said one cable carrier tray section.

### BRIEF DESCRIPTION OF THE DRAWING

To facilitate an understanding of the foregoing ideas, there is described hereinafter one embodiment of the invention, with reference to the accompanying illustrative drawings, in which:
Figure 1 is a side elevation view of a point of connection of two sections of cable carrier tray in which a conventional support plate member has been installed;
Figure 2 is a top plan view, partly in section, of the point of connection of cable carrier tray sections of Figure 1;
Figure 3 is a longitudinal cross section elevation view a point of connection of two sections of cable carrier tray in which a support plate member according to the invention has been installed;
Figure 4 is a top plan view, partly in section, of the point of connection of cable carrier tray sections of Figure 3;
Figure 5 is a top plan view of a support plate member according to the invention;
Figure 6 is a cross section view on the line VI-VI of Figure 5; and
Figure 7 is a bottom plan view of the support plate member of Figure 4.

### DETAILED DESCRIPTION OF THE INVENTION

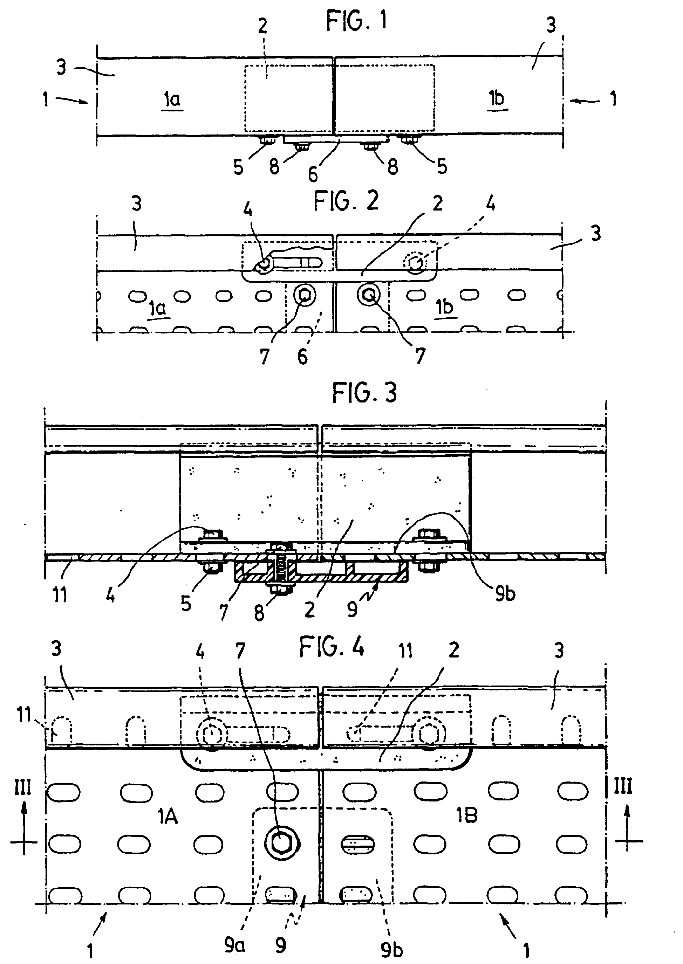

It is known to connect two sections 1a and 1b of cable carrier tray 1 coming together at a point of connection by means of a joining members 2 coupled by engagement with the side walls 3 of the cable carrier trays 1 and attached to the bottom walls of the sections by bolts 4 and nuts 5, as shown in Figures 1 and 2.

The attachment made by means of the joining members 2 frequently turns out to be insufficient, particularly in the case of trays of great width or when the cables to be carried are of great weight.

In such cases, the solution has been adopted of including support plate members 6 which are associated by way of bolts 7 and nuts 8 with the sections 1a and 1b of the cable carrier tray 1 to be connected, as shown in Figures 1 and 2.

Although with this way of operating both sections 1a and 1b of the cable carrier tray 1 are rigidly attached together, they are so rigidly attached that the ensemble of the joint, in view of the lack of freedom, is incapable of absorbing the movements due to expansion strains which may arise, whereby undesired deformation which may endanger the effectiveness of the installation occurs.

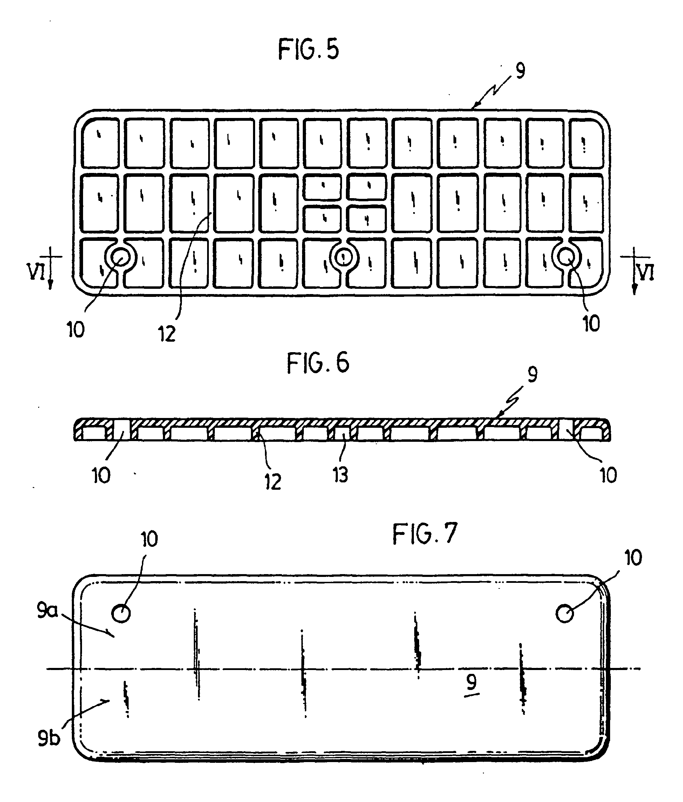

With a view to avoiding such structural rigidity and allowing controlled degrees of freedom in the point of connection of the two sections 1A and 1B where two cable carrier trays 1 are connected, as is to be seen in Figures 3 and 4, the solution has been adopted of devising a new support plate member 9, shown in detail in Figures 5, 6 and 7, having the peculiarity of being provided with anchoring means to one only of the sections 1A and 1B of cable carrier tray 1. To this end, the support plate member 9 is assumed to be differentiated ideally in two longitudinal portions 9a and 9b and the anchoring means are situated on only one of them, formed in this case on the half 9a by respective through holes 10, arranged in coordinated fashion with the holes 11 of the section 1A of the cable carrier trays 1, while the other portion 9b is smooth and forms a free support stirrup for the section 1 B of said cable carrier trays 1.

Obviously, with the present arrangement of support plate member 9, the sections 1A and 1B of cable carrier tray 1 are provided with degrees of freedom for absorbing the movements due to the stress produced by thermal expansion or contraction and other reasons, without losing the support function thereof.

The support plate member 9, as is usual, is provided on the concealed face of use with rigidizing or reinforcing ribs 12, at the same time as it is provided with blind holes 13 which may be opened as required.

## Claims

1. A support plate member for sections of electrical cable carrier trays, said tray sections (1A, 1B) being generally elongated, defining a width in the transverse direction and defining ends in the lengthways direction, each pair of said tray sections (1A, 1B) being joined at a point of connection, where said support plate member (6) is of the type formed by a flattened body member having: a larger dimension defining a longitudinal direction of said support plate member (6) and which is equal to or less than said width of said tray sections (1A, 1B), a first surface having reinforcing ribs (12), and a second smooth surface, wherein said support plate member is differentiated in said longitudinal direction in two ideal halves (9a, 9b), of which one of said halves (9a) is provided with means for attachment (10) to be attached to one of said ends of a first tray section (1A, 1B) of said pair of tray sections (1A, 1B) to be joined, while the other of said halves (9b) lacks such attachment means and forms a stirrup for the free seating of said end of a second tray section (1A, 1B) of said pair, said second tray section (1A, 1B) having degrees of freedom relative to said support plate member (6) and to said first cable carrier tray section (1A, 1B).

## Patentansprüche

1. Tragplatte für Abschnitte von Stromkabelträgern, bei der die Trägerabschnitte (1A, 1B) im Allgemeinen länglich ausgebildet sind, in Querrichtung eine Breite haben und in Längsrichtung Enden bilden, bei der jedes Paar von Trägerabschnitten (1A, 1B) an einem Verbindungspunkt miteinander verbunden ist, bei der die Tragplatte (6) von der Art eines abgeflachten Körpers ist mit einem größeren Maß, das eine Längsrichtung der Tragplatte (6) bildet und das gleich oder kleiner als die Breite der Trägerabschnitte (1A, 1 B) ist, mit einer ersten Fläche, die Verstärkungsrippen (12) aufweist, und einer zweiten, glatten Fläche, bei der die Tragplatte in Längsrichtung in zwei ideale Hälften (9a, 9b) unterschieden ist, von denen eine der Hälften (9a) mit Befestigungsmitteln (10) versehen ist, die an einem der Enden eines ersten Trägerabschnitts (1A, 1B) des zu verbindenden Paares von Trägerabschnitten (1A, 1B) zu befestigen sind, während die andere der beiden Hälften (9b) keine solchen Befestigungsmittel hat und einen Bügel für den freien Sitz des Endes eines zweiten Trägerabschnitts (1A, 1B) des Paares bildet, wobei der zweite Trägerabschnitt (1A, 1B) einen Freiheitsgrad gegenüber der Tragplatte (6) und dem ersten Kabelträgerabschnitt (1A, 1B) hat.

## Revendications

1. Elément de plaque de support pour sections de goulotte porteuse de câbles électriques, lesdites sections de goulotte (1A,1B) étant généralement allongées, définissait une largeur dans le sens transversal et définissant des extrémités dans le sens de la longueur, chaque paire de dites sections de goulotte (1A, 1B) étant reliée en un point de raccordement, où ledit élément de plaque de support (6) est du type formé par un élément de corps aplati ayant : une dimension plus grande définissant un sens longitudinal dudit élément de plaque de support (6) et qui est inférieure ou égale à ladite largeur desdites sections de goulotte (1A, 1B), une première surface ayant des nervures de renforcement (12), et une seconde surface lisse, dans lequel ledit élément de plaque de support se distingue dans ledit sens longitudinal en deux moitiés idéales (9a, 9b), dont une desdites moitiés (9a) est munie de moyens de fixation (10) à fixer à une desdites extrémités d'une première section de goulotte (1A, 1B) de ladite paire de sections de goulotte (1A, 1B) à relier, tandis que l'autre desdites moitiés (9b) n'est pas dotée de tels moyens de fixation et forme un étrier pour l'assise libre de ladite extrémité d'une seconde section de goulotte (1A, 1B) de ladite paire, ladite seconde section de goulotte (1A, 1B) ayant des degrés de liberté par rapport au dit élément de plaque de support (6) et à ladite première section de goulotte porteuse de câbles (1A, 1B).
